# EUROPEAN PATENT APPLICATION

(11) **EP 4 040 163 A1**
(43) Date of publication of application: **10.08.2022**
(21) Application number: 22153572.7
(22) Date of filing: 27.01.2022
(51) Int. Cl.: G01N 35/10

(54) **DEVICE FOR MOVING PROBES**

(30) Priority: 03.02.2021 LU 102489
(71) Applicant: Stratec SE, 75217 Birkenfeld (DE)
(72) Inventor: Meyer, Andreas, 75210 Keltern (DE)
(74) Representative: Tegethoff, Sebastian

(57) **Abstract**

The invention relates to a device and a method for moving probes like aspiration probes in automated analyser systems and provides a device for aspirating samples or reagents, comprising a lift chassis, a motor for driving a rotatable spindle nut, wherein the motor is attached to the lift chassis, an aspiration probe which has on its outer side a lead screw which is running through the spindle nut of the motor.

## Description

### Field of the Invention

The invention relates to a device and a method for moving probes like aspiration probes in automated analyser systems.

### Brief description of the related art

Automated analyzer systems for use in clinical diagnostics and life sciences are produced by a number of companies. For example, STRATEC^{®} SE, Birkenfeld, Germany, produces a number of devices for specimen handling and detection for use in automated analyzer systems and other laboratory instrumentation.

STRATEC designs and manufactures diagnostic instruments for performing diagnostic assays. The processing of diagnostic assays in automated analyzer systems often requires the repeated dispense of samples or reagents into specific reaction vessels (of so-called consumables) and the subsequent aspiration from the respective cavities. In most cases the aspiration is required to remove already used or not required liquid volumes from the vessels to allow further processing (e.g. add of next reagent). Therefore, it is necessary to differentiate between the aspiration of supernatants or volume proportions and the aspiration of whole liquid volumes. For example, multiple wash steps with different wash buffers will be performed in clinical or molecular analyzers in order to eliminate contaminants and thus to decrease background signals in the sample.

A device is known from the prior art which provides one aspiration probe per lift. Each probe is mounted on a cantilever arm which is connected to a trapezoidal gear rack. A stepper motor with pinion drives the rack. Two mounted half shells and two slide bearings allow the linear guiding of the gear rack and provides also interfaces for the attachment of the motor, an initialization sensor (light barrier) as well as the mounting of the complete lift. The axial or linear tolerance compensation is an integral part of the aspiration probe. Coil springs allow to touch the consumable bottoms independently of mechanical tolerances in an axial or linear movement direction. The concept of the lift requires an additional bushing for the linear guiding of the probe.

The wash or aspiration lift of said device is based on the same linear drive mechanism which is described above. The main difference is the fact that multiple aspiration probes are moved simultaneously by a common adapter plate onto which they are mounted. Two gear racks are driven by one motor which is connected via a synchronization shaft with the relating pinions. The integrated PCBA (= printed circuit board assembly) provides sensor devices for aspiration monitoring.

The washing module includes a lift mechanism with also multiple aspiration positions. Five probes are mounted to a carrier or sledge that is axially moved by a lead screw or spindle drive. A probe guide above the multi-cavity consumable ensures the directed linear stroke of the aspiration probes. The system performs other washing functionalities as well and provides its own control electronics.

Another device which is known in the art also contains its own electronics responsible for motion control and aspiration monitoring, among other functions. Each device is equipable with two probes. These probes (with integrated compression springs for tolerance compensation) are hooked to a sledge that is guided in linear direction by the lift backbone. A gear wheel segment with eccentric driver translates the rotary motion into a linear Z-movement of sledge and probe. Guide bushings in the lift base plate direct the probe motion. The gear wheel is rotated by a pinion which is directly mounted on a shaft of a stepper motor.

Another device that is known from the prior art is also multi-position washer. The aspiration probe lift concept is similar to the former described devices. A main difference in comparison to other devices is that beside the aspiration probe also the reagent dispense ports are moved in Z-direction. All modules provide different sensor systems in order to ensure the reagent independent monitoring of the aspiration process:
- Optical sensors: Monitoring the liquid aspiration through the transparent probe
- Ultrasonic sensors: Monitoring the liquid aspiration through tubing

Further, a device is known where the probes for aspiration and dispense are combined in an assembly. The angled dispense probe is aligned to the aspiration probe to clean or rinse the outer surface via the liquid injection. For tolerance compensation the probe assembly is hooked to flat spring. A gear rack drive performs the linear lift movement.

A dispense application that is already known has a hollow spindle and comprises a liquid handling device for the aspiration and dispense of liquids similar to a pipettor. The automated pipetting system consists of a pipette lift and a positive displacement pump. Both submodules are based on a linear stepper motor. The coaxially moved hollow spindle of the lift is equipped with a pipette at the tip or front edge which is facing the liquid reservoir. The moving axis allows to dip the pipette into the liquid and vice versa. The rear end of the lift spindle is connected via a tubing with the air displacement pump to implement liquid aspiration and dispense steps. This solution is only intended for dispense applications and does not allow for the aspirates of liquid waste.

Published U.S. Patent Application US 2005/074363 A 1 discloses an automated apparatus for extracting liquid samples, particularly biological fluids such as urine, blood serum, plasma, cerebrospinal fluid and the like, from a container. In particular, the document provides a method to automatically extract a desired amount of sample fluid from a closed container in preparation for clinical diagnosis. The document is further related to a method and apparatus for cleaning liquid aspiration probes.

Published U.S. Patent Application US 2012/186367 A1 relates to pipetting device omprising more than one pipetting unit, wherein said pipetting units are independently movable in Y and Z direction and comprise at least one module arranged in a staggered manner compared to the adjacent pipetting unit.

Published Chinese Patent Application No. 111 735 981 A describes a mechanical arm sample injection module. The mechanical arm sample injection module comprises a first sampling device provided with a sampling needle assembly and a second sampling device provided with a pipette tip assembly, the first sampling device is used for sucking a reaction reagent into the reaction cup; the second sampling device is used for sucking a sample into the reaction cup; the mechanical arm sample injection module further comprises a transverse movement assembly, a longitudinal movement assembly and an up-down movement assembly. The transverse movement assembly drives the first sampling device and the second sampling device to move transversely, the longitudinal movement assembly drives the first sampling device and the second sampling device to move longitudinally, and the up-down movement assembly drives the first sampling device and the second sampling device to move up and down. The mechanical arm sample injection module can enable the first sampling device and the second sampling device to transversely move, vertically move and longitudinally move, namely move in three directions to flexibly control sampling, so a reaction reagent and a sample are added into a specified reaction cup, and accurate and rapid sampling is realized.

Published European Patent Application No. EP 1 075 869 A1 discloses a present micro array manufacturing apparatus including a substrate placement portion on which a plurality of substrates can be arranged, a titer plate for storing a solution including a living body sample, a solution storing member for taking in the solution from the titer plate and storing the solution therein, and a needle which can be inserted into the solution storing member to allow the solution stored in the solution storing member to adhere onto each of the substrates by a given quantity, wherein the solution storing member and needle are moved in directions where they approach and part away from the substrates to thereby form spots on the substrates. And, the individual operations of the solution storing member and needle are carried out by single drive means.

Published European Patent Application No. EP 2 754 498 A1 teaches an apparatus for aspirating liquid from a container, e.g., a test tube, having a puncturable stopper includes a pair of stepper motors that share a common linear actuator or drive member. One motor operates to axially advance the linear drive member (preferably a lead screw) to a position in which it serves to position a rigidly connected tube-detector/stripper member in engagement with the top of a stopper on a tube. Thereafter, the second motor operates to move along the surface of the same drive member to advance an aspiration probe through the engaged stopper and into a liquid aspirating position within the tube. Preferably, a linear guide rail, slidably mounted on a frame that supports the liquid-aspirating apparatus, serves to guide both the movement of the aspiration probe and the linear drive member. As a result of the shared components, the apparatus is highly precise and reliable

Disadvantages of the available solutions refer to a high effort and complexity for guiding and bearing of the aspiration probe and / or the actuated mechanism which generates the linear movement of the probe. Further, drive systems with high complexity and large number of parts for the realization of the linear or axial movement are used in known solutions. Existing devices use additional transmissions or gearing mechanisms to realize the linear probe movement.

Already available devices have the following disadvantages if the aspiration probe shall be able to reach the bottom of a liquid holding cavity. They require separate features or mechanisms for axial or linear tolerance compensation in movement direction. They need force or travel / stroke control with costly components for force and positioning monitoring. High wear and abrasions is necessary due to the high number of moved components which cause a reduced module and instrument reliability. Finally, a high effort for assembling and adjustment of lift components or the complete module (e.g. adhesive bonding / gluing of components plus alignment in a tool / fixture) will be necessary.

### Object of the Invention

It is therefore the object of this invention to provide a device and a method for aspirating samples or reagents requiring less space by a compact form.

### Summary of the Invention

The present invention provides a device for aspirating samples or reagents, comprising a lift chassis, a motor for driving a rotatable spindle nut, wherein the motor is attached to the lift chassis, an aspiration probe which has on its outer side a lead screw which is running through the spindle nut of the motor.

In a further aspect of the device, it is intended that a distribution board is attached to the lift chassis, for controlling the motor.

The device according to the invention may further comprise an aspiration probe that is vertically orientated.

In a further embodiment of the invention, the spindle nut is accommodated in a rotor with plain bearing or linear ball bearings which are surrounded by a stator.

It is also envisaged that a rear motor cap is located on the upper side of the motor and a front motor cap is located on the underside of the motor.

The device according to the invention may further comprise a wave compression spring that is arranged between the upper ball bearing and the rear motor cap.

In a further aspect regarding the device of the present invention, a spindle nut, ball bearings, stator, rear motor cap and front motor cap and wave compression spring are accommodated in a motor housing.

A further embodiment may have an aspiration probe that comprises an aspiration needle that is at least partially enclosed by a lead screw which is connected to an aspiration probe head.

A device according to the invention may further comprise a lead screw and aspiration probe head that are one part.

It is further intended that the aspiration probe head comprises a hose connection and one side a probe flag with a key-like cross section.

The device according to the invention may further comprise an upper end of a tubing of the aspiration probe is the hose connection.

It is also envisaged in a further aspect of the invention the aspiration probe head comprised cut-outs as indicator windows through which the transparent inner tubing of the aspiration probe is visible.

The device according to the invention may comprise in another embodiment the lower end of the aspiration probe being slotted.

The device as described above may further comprise an upper part of the chassis that comprises a linear guiding with a cross section for accommodating the key-like cross section of the probe flag of the aspiration probe head having a corresponding cross-section.

In another aspect of the invention, the distribution board may comprise at least one initialization sensor which surrounds at on two sides the aspiration probe, an aspiration monitoring sensor surrounding the aspiration probe at least on two sides, a lift connector for connecting the device to control member of a connected device, a motor connector for connecting the distribution board to the motor and an additional connector for further external devices. The initialization sensor can be a light barrier for detecting the probe flag of the aspiration probe head.

It is also intended in a further aspect of the invention that the upper part of the lift chassis comprises a hose locking adapter which comprises a cylindrical part for accommodating the aspiration hose and on one end a cantilever for fixation of the locking adapter in the lift chassis.

The lift chassis may comprise at least one of selected from the group consisting of a motor interface for fixation of the motor on its underside, sides recesses on its lateral sides for fixation of aspiration hoses, a vertical orientated linear guiding for the aspiration probe and a hole for taking up the hose locking adapter.

The invention refers further to an embodiment comprising a dispense manifold that is mounted to the underside of the motor, wherein the dispense manifold comprises a baseplate comprising a switching valve connected to a liquid supply, an injector nozzle connected to the switching valve, wherein the injector nozzle's outlet is directed towards the lower end of the aspiration probe.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows a single probe aspiration lift.
FIG. 2 shows non-captive lead screw motor with hollow shaft and integrated axial tolerance compensation mechanism.
FIG. 3 shows an axial screwing movement (arrow) of the rotor shaft inside the motor, when the tip of the aspiration probe reaches / touches an end surface or mechanical stop.
FIG. 4 shows the aspiration probe with integrated lead screw geometry.
FIG. 5 shows in detail the head of the aspiration probe.
FIG. 6 shows aspiration probe features: Left: Cross-sectional view of aspiration probe head; Middle: Three-quarter-section view of lift assembly; and Right: Detail view of slotted probe end.
FIG. 7 shows a PCBA: Left: Mounted lift electronics with directly connected motor; Middle: front side of PCBA with initialization sensor; and Right: Back side of PCBA with aspiration sensor and connectors.
FIG. 8 shows an aspiration probe in initialization position: Left: Side view; and Right: Front view.
FIG. 9 shows an aspiration monitoring sensor on a PCBA with locked aspiration hose.
FIG. 10 shows a hose lock of aspiration monitoring device: Left: Opened lock without tubing; and Right: Closed lock with inserted and routed tubing.
FIG. 11 shows a hose locking adapter and its counterpart on the housing.
FIG. 12 shows a lift chassis: Left: Unmounted lift chassis; Middle: Integrated lift chassis with all components assembled; and Right: Attached protective cover.
FIG. 13 shows an embodiment of a project-specific dispense manifold (tubing not shown).

### Detailed Description of the Invention and the Figures

The technical problem is solved by the independent claims. The dependent claims cover further specific embodiments of the invention.

The invention relates to a lift assembly for the axial or linear movement of an aspiration probe. In association with a fluid pump, the lift module provides the possibility to aspirate liquids from different kinds of reaction vessels or other liquid holding cavities. According to the scope of the invention the following description will be focusing the lift module.

A particular feature is the lead screw motor with the integrated aspiration probe which drives through a non-captive linear actuator and lead screw motor, respectively. The "on-board" distributor electronics allows for the control of the lift assembly and also the process monitoring of the aspiration process via an external control unit.

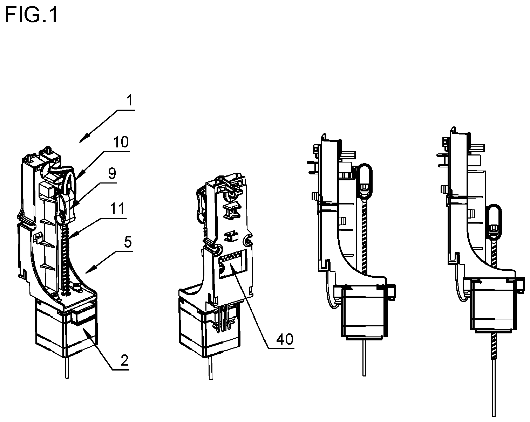

The single probe aspiration lift 1 is shown in FIG. 1 in different perspective views, and it basically consists of a lead screw motor (or stepper motor) 2, a lift chassis 5 with distribution / sensor board 40 and an aspiration probe 9 which is surrounded by a lead screw 11. The main function of the device is the axial or linear movement of the mentioned aspiration probe to perform workflow required aspiration steps. The lead screw drive (motor and lead screw) translates the rotary motion of the motor and a spindle nut which is arranged within the rotor into the desired stroke movement.

It is to be noted that there is no prior art know which provides an aspiration probe that is surrounded by a lead screw so that the probe has a double function, aspirating or dispensing fluids and being directly moved through a lead screw motor. Published U.S. Patent Application US 2005/074363 A1 provides a lead screw which is separated from the aspiration probe. The technical difference to the present invention is that the lead screw is stationary, and the actuator moves. The present invention provides a lead screw that moves and thus the aspiration probe moves too because aspiration probe and lead screw are a single piece.

The device needs to be operated in conjunction with a fluid pump or pump system in order to allow the aspiration functionality. Each aspiration probe is connected to a separate pump (or pump channel) via hoses 10. The device lifts the aspiration probe into different liquid containing cavities and the connected pump transfers the media to another cavity which can be an intermediate or storage reservoir. Movement of the lift as well as analyzing sensor signals of sensors which are placed at the distribution board has to be controlled by separate control electronics, which also provides power and communication interfaces. Alternatively, this control electronic could also be implemented in the device.

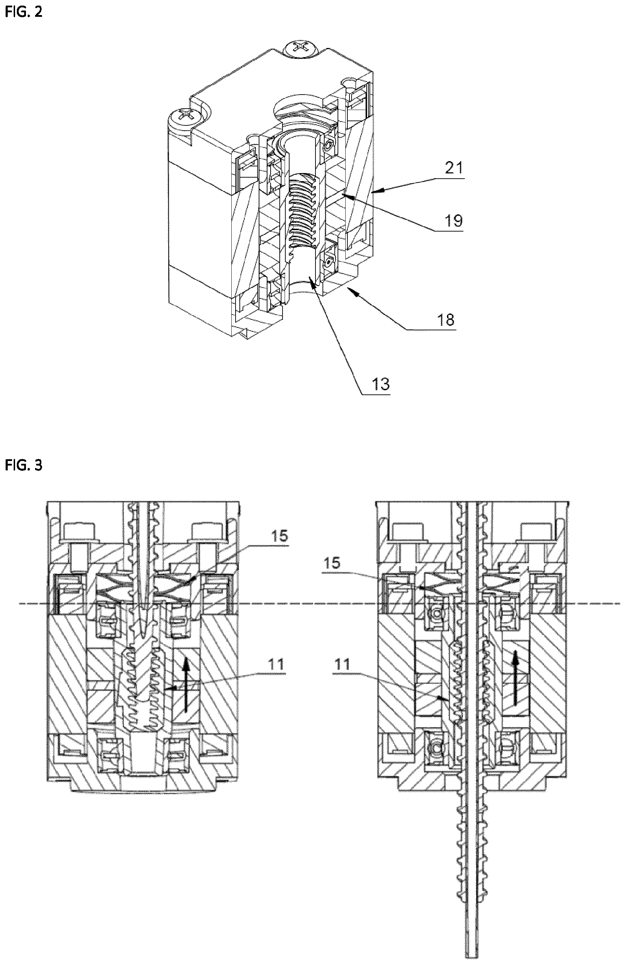

One core element of the module is the non-captive lead screw motor with hollow shaft 13 and integrated axial tolerance compensation mechanism (FIG. 2). The motor provides a wave compression spring 15 which is located between a rear motor cap (part of the stator housing) and rotor 19. FIG. 2 shows further a front rotor cap 18, the stator 21 and ball bearings of the motor via a cross-sectional view.

FIG. 3 shows that the wave compression spring 15 allows an axial movement indicated by the arrow of the lead screw 11, respectively rotor shaft, inside the motor when the tip of the aspiration probe reaches / touches an end surface or mechanical stop (not shown). This mechanism ensures an error free (e.g., no step loss of stepper motor) and reliable positioning of the aspiration probe independent of potential hardware and consumable tolerances of the peripheral and interacting components. Thereby a complete aspiration of liquid holding cavities is possible because the probe is able to reach the bottom surface.

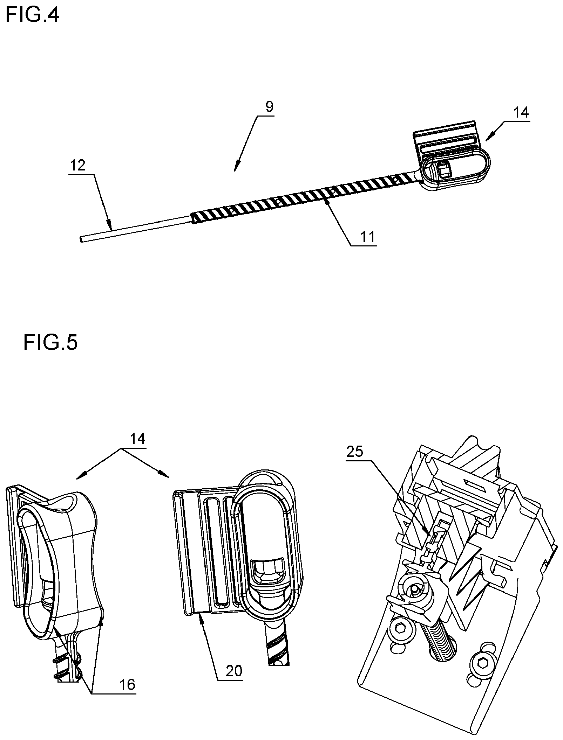

FIG. 4 shows the aspiration probe 9 with integrated lead screw 11 geometry, aspiration probe tip 12 and aspiration probe head 14. The aspiration probe 9 may be made of steel which is coaxially arranged into the lead screw thread / geometry and accordingly moves along the motor rotation axis. Due to the configuration of the aspiration probe with an at least partially surrounding lead screw, the setup is deemed to be one piece due to the permanent connection of the lead screw around the aspiration probe.

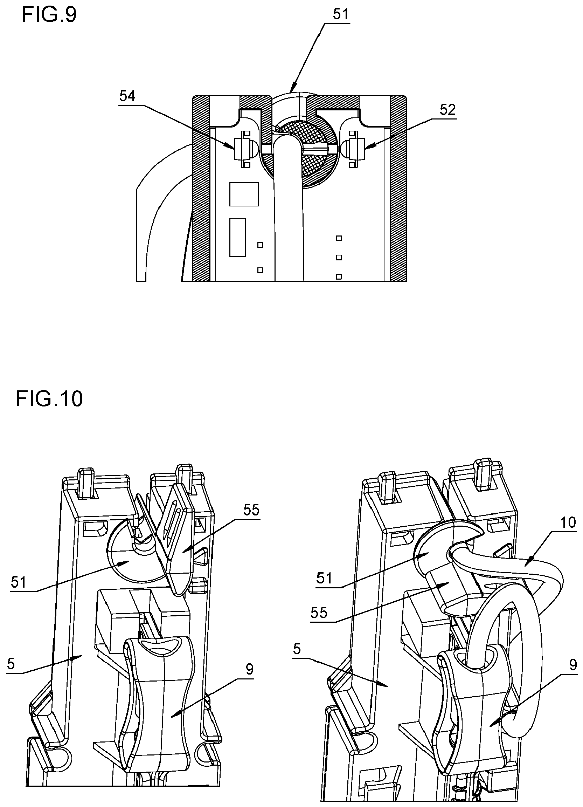

FIG. 5 shows an aspiration probe head 14 in detail. Manual handling (e.g. for maintenance exchange) by technician or service personnel is supported by the recessed grips 16 and enables a two-finger operation. The flag-like feature 20 is used for linear guiding (plain bearing but can also be a linear ball bearing) and functions as a rotation lock. The flag 20 cross section is shaped similar to the bit of a key and fits to a guide rail element 25 of the lift chassis. It limits the rotational tolerance of the aspiration probe and avoids unintended leave and/or removal of the aspiration probe in combination with the locking feature depicted in FIG. 10.

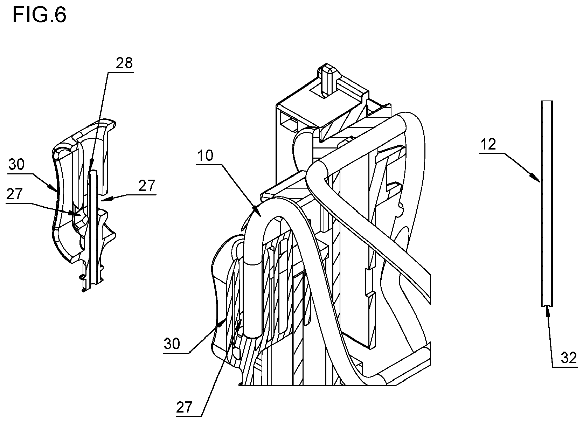

FIG. 5 shows that the protruding upper end of the probe is the connection port for the mounting of flexible aspiration hoses 10 (not shown). It is surrounded by the aspiration probe head 14 and represents the complete hose interface. All upper aspiration probe ends are chamfered 28 to facilitate hose assembly. The indicator window 27 (FIG. 6) gives information about a correctly mounted aspiration hose 10 (pushed to end position). Kinking of the hose during movement of the aspiration probe (which can influence the aspiration process) will be avoided by a protective collar 30. It also prevents a too tight routing of the hoses which also could affect hose kinking. A slot 32 at the aspiration probe tip 12 guarantees an aspiration without the generation of a vacuum and the consequential interruption or stop of the process when the probe is reaching the bottom of a cavity.

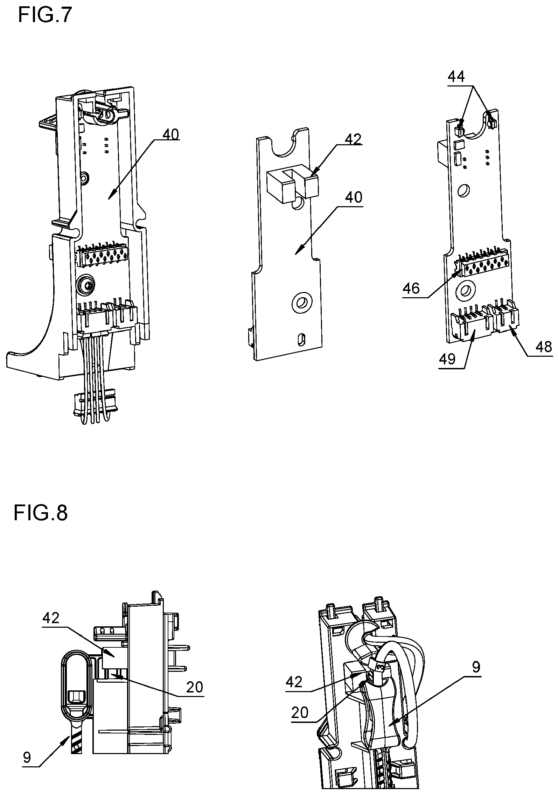

The embedded electronics on the printed circuit board arrangement (PCBA) 40 from FIG. 7 are responsible for the power and signal distribution and provides sensors for detection purposes as well as process monitoring. The PCBA 40 of FIG. 7 shows an initialization sensor 42, an aspiration monitoring sensor 44, a lift connector 46 to superior electronics (CU PCBA) which is required to supply and control the SIPAL sub-module via the lift PCBA. The PCBA 40 of FIG. 7 further shows an additional connector 48 and a motor connector 49.

The lead screw motor is directly connected to the PCBA. It also provides an additional interface for the connection of other actuators (e.g. switching valve).

The first on-board sensor (FIG. 8) is an initialization sensor 42, e.g. a light barrier, and allows the initialization of the lift mechanics. Trigger of the sensor is the already described flag-like element 20 of the aspiration probe 9.

An optoelectronic sensor device which consists of a transmitter 52 (LED) and a receiver 54 is used to observe the fluid aspiration in the transparent hose 10 (FIG. 9) in a hose locking adapter 51. The transmitter 52 sends infrared light through the transparent aspiration hose 10 to the receiver 54. By the signal change and variation as well as the related interpretation / analysis it is possible to monitor the liquid handling process. It ensures that the aspiration was completed successfully, and processing can continue as planned / scheduled.

In the area of the aspiration monitoring sensor each hose will be fixated by a specific locking device, a hose locking adapter 51, to avoid the disturbance or fluctuation of the measurement (FIG. 10). In the left part of FIG. 10, the hose locking adapter 51 is in an open / unlocked position, where the aspiration hose 10 can be inserted. After insertion of the hose 10, the hose locking adapter 51 can be clamped by turning the cantilever 55 in a closed / locked position, which is shown in the right part of FIG. 10.

In the closed state of the locking adapter 51 it is not possible to remove the aspiration probe 9 from the lift. The cantilever 55 functions also as mechanical hard stop and avoids that the lead screw 11 of the aspiration probe 9 losses the contact to the lead screw / spindle nut of the motor.

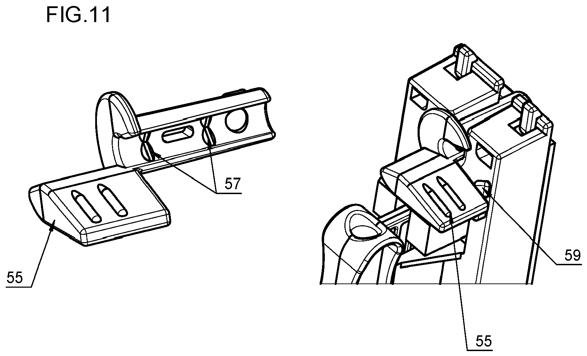

FIG. 11 shows the hose locking adapter 51 in more detail and a side view of it in a closed / locked position. The hose locking adapter 51 can be actuated by the latch / cantilever 55 at the front. Fixation rips 57 at the inner side of the hose locking adapter 51 avoid an axial movement of the hose after locking. A snap interface 59 keeps the cantilever 55 of the hose locking adapter 51 closed after rotation.

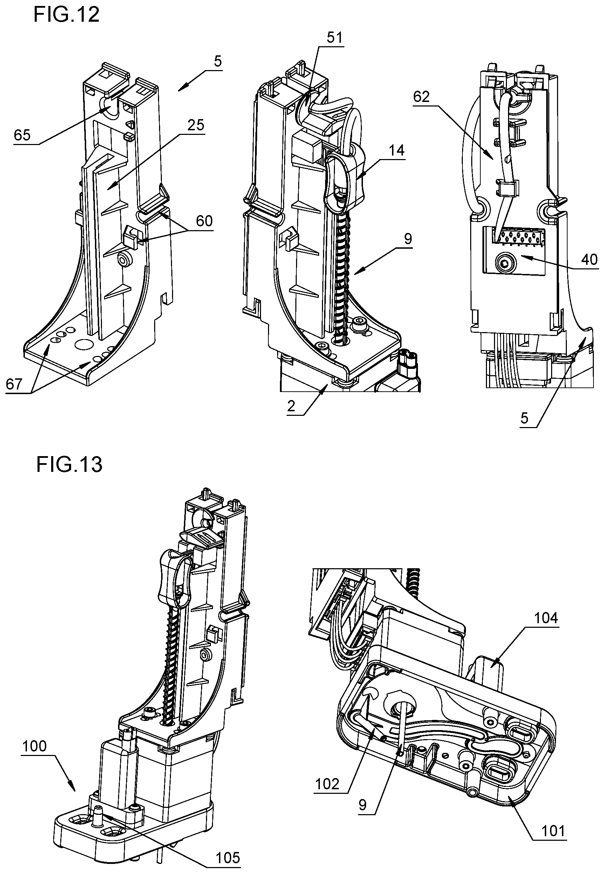

The lift chassis 5 as shown in FIG. 12 is the interface between motor, aspiration probe and electronics board. Primary function of the lift chassis 5 is the linear guiding of the aspiration probe 9. For this purpose, it provides an integrated guide rail element 25 and interacts with the flag 20 (not visible) of the aspiration probe head 14. The PCBA 40 will be mounted the lift chassis 5. Integrated static hose clamp / fixation features 60 allow the reliable and repeatable routing of the tubing and should prevent kinking. A cover 62 at the rear side protects the PCB against environmental influences and conditions. The hose locking adapter 51 of the aspiration monitoring device will also be installed to the chassis in a hose adapter interface 65. The lift chassis 5 further comprises a motor interface 67 with several holes for fixation of the lead screw motor 2.

Depending on the installation conditions and the lift periphery each lift chassis 5 can be arranged and fixed in defined rotation angles on the motor 2 to address different integration requirements. This option is given by the different motor interfaces which are shown in FIG. 12.

FIG. 13 shows that the aspiration probe lift 1 can be combined with a dispense manifold 100 in order to perform washing functions including liquid dispense at a dedicated position. The dispense manifold 100 provides an integrated injection nozzle 102 fixed to the manifold body 101 which is facing the reaction vessel (not shown). For cleaning purposes, the injector nozzle 102 can be aligned to the aspiration probe 9. According to this the reagent dispense is used to rinse the outer surface of the aspiration probe 9. Each dispense manifold 100 will be equipped with a switching valve 104 for dispense control. The supply / pressure-side hose is connected to the liquid port 105 of the dispense manifold 100.

The core of the invention is the small form factor of the lift assembly and the high degree of functional integration which leads to a low complexity stand-alone sub-module.
- Lead screw / spindle with integrated aspiration probe, tubing connection port, guiding features, handling interface for service personnel and light barrier flag
- Linear actuator (non-captive lead screw motor) with integrated mechanism for axial tolerance compensation to ensure reliable reaching of the reaction vessel bottom with the aspiration probe
- Distribution board (PCBA) including sensors for lift initialization and aspiration monitoring which needs be controlled by a separate control electronics.
- Lockable hose fixation device for reliable and repeatable positioning of aspiration tubing with respect to the aspiration sensor
- Lift housing / chassis with linear guiding, lead screw rotation lock, hose routing features and distribution board interface.

The advantages of the invention can be summarized as follows:
- General motor with integrated axial tolerance compensation device
- Lead screw with integrated aspiration probe / needle
- Integrated aspiration monitoring device
- Small footprint and compact form factor of lift assembly which facilitates integration
- High degree of functional integration
- Low module complexity due to low number of components
- Low tolerance chain and low influence of tolerances at performance
- Less effort for guiding and bearing of movable components
- Scalable design (e.g. lift / probe travel, probe diameter, motor size / torque etc.)
- Different precision classes feasible depending on the application requirements
- One central interface for electronic connection of module
- Easy removal and exchange of aspiration probe and/or tubing (serviceability)
- Module assembly without alignment / adjustment steps

Alternative approaches may encompass
- SIPAL comprises pump, too
- SIPAL comprises control electronics, too
- Providing dispense functionality in addition to aspiration
- Lead screw / spindle with interface / mechanism for pick-up and / or eject of Disposable tips instead of steel probe

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: aspiration probe lift
- 2: lead screw motor
- 5: lift chassis
- 9: aspiration probe
- 10: hose
- 11: lead screw
- 12: aspiration probe tip
- 13: hollow shaft
- 14: aspiration probe head
- 15: wave compression spring
- 16: grip
- 18: front motor cap
- 19: rotor
- 20: flag
- 21: stator
- 25: guide rail element
- 27: indicator window
- 28: chamfered aspiration probe end
- 30: protective collar
- 32: slot
- 40: printed circuit board assembly (PCBA)
- 42: initialization sensor
- 44: aspiration monitoring sensor
- 46: lift connector
- 48: additional connector
- 49: motor connector
- 51: hose locking adapter
- 52: transmitter
- 54: receiver
- 55: cantilever
- 57: fixation rips
- 59: cantilever snap interface
- 60: hose fixation
- 62: cover
- 65: hose adapter interface
- 67: motor interface
- 100: dispense manifold
- 101: manifold body
- 102: injector nozzle
- 104: switching valve
- 105: liquid port

## Claims

1. A device for aspirating samples or reagents, comprising
- a lift chassis,
- a motor for driving a rotatable spindle nut, wherein the motor is attached to the lift chassis,
- an aspiration probe which has on its outer side a lead screw which is running through the spindle nut of the motor.

2. The device of claim 1, wherein a distribution board is attached to the lift chassis, for controlling the motor.

3. The device of claim 1 or 2, wherein the aspiration probe is vertically orientated.

4. The device of any one of claims 1 to 3, wherein the spindle nut is accommodated in a rotor with plain bearing or linear ball bearings which are surrounded by a stator.

5. The device of any one of claims 1 to 4, wherein a rear motor cap is located on the upper side of the motor and a front motor cap is located on the underside of the motor.

6. The device of claim 5, wherein a wave compression spring is arranged between an upper ball bearing and the rear motor cap.

7. The device of claim 4, wherein spindle nut, ball bearings, stator, rear motor cap and front motor cap and wave compression spring are accommodated in a motor housing.

8. The device of any one of claims 1 to 7, wherein the aspiration probe comprises an aspiration needle that is at least partially enclosed by a lead screw which is connected to an aspiration probe head.

9. The device of claim 8, wherein lead screw and aspiration probe head are one part.

10. The device of claim 8 or 9, wherein the aspiration probe head comprises a hose connection and one side a probe flag with a key-like cross section.

11. The device of claim 10, wherein an upper end of a tubing of the aspiration probe is the hose connection.

12. The device of any one of claims 8 to 11, wherein the aspiration probe head comprised cut-outs as indicator windows through which the transparent inner tubing of the aspiration probe is visible.

13. The device of any one of claims 1 to 12, wherein the lower end of the aspiration probe is slotted.

14. The device of claim 10 and claims 11 to 13 dependent from claim 10, wherein the upper part of the chassis comprises a linear guiding with a cross section for accommodating the key-like cross section of the probe flag of the aspiration probe head having a corresponding cross-section.

15. The device of claim 2 and claims 3 to 14 dependent from claim 2, wherein the distribution board comprises at least one of an initialization sensor which surrounds at on two sides the aspiration probe, an aspiration monitoring sensor surrounding the aspiration probe at least on two sides, a lift connector for connecting the device to control member of a connected device, a motor connector for connecting the distribution board to the motor and an additional connector for further external devices.

16. The device of claim 10, wherein the initialization sensor is a light barrier for detecting the probe flag of the aspiration probe head.

17. The device of any one of claims 1 to 16, wherein the upper part of the lift chassis comprises a hose locking adapter which comprises a cylindrical part for accommodating an aspiration hose and on one end a cantilever for fixation of the locking adapter in the lift chassis.

18. The device of any one of claims 1 to 17, wherein the lift chassis comprises at least one of selected from the group consisting of a motor interface for fixation of the motor on its underside, sides recesses on its lateral sides for fixation of aspiration hoses, a vertical orientated linear guiding for the aspiration probe and a hole for taking up the hose locking adapter.

19. The device of any one of claims 1 to 18, comprising a dispense manifold that is mounted to the underside of the motor, wherein the dispense manifold comprises a baseplate comprising a switching valve connected to a liquid supply, an injector nozzle connected to the switching valve, wherein the injector nozzle's outlet is directed towards the lower end of the aspiration probe.
